# EUROPEAN PATENT APPLICATION

(11) **EP 2 184 152 A1**
(43) Date of publication of application: **12.05.2010**
(21) Application number: 08792618.4
(22) Date of filing: 21.08.2008
(51) Int. Cl.: B29C 45/14, G02B 3/00, B29L 11/00

(54) **MOLDING METHOD, OPTICAL ELEMENT MANUFACTURING METHOD, AND ARRAYED OPTICAL ELEMENT**

(30) Priority: 31.08.2007 JP 2007226500
(71) Applicant: Konica Minolta Opto, Inc., Hachioji-shi, Tokyo 192-8505 (JP)
(72) Inventor: HOSOE, Shigeru, Hachioji-shi Tokyo 192-8505 (JP)
(74) Representative: Henkel, Feiler & Hänzel
(86) International application number: PCT/JP2008/064897
(87) International publication number: WO 2009/028391

(57) **Abstract**

There is provided a high-efficient molding method for realizing an inexpensive optical element exhibiting environmental stability of optical performance approximately equivalent to glass optical elements. Optical plate 71p which is a transparent inorganic material with stable optical property in the environment, is inserted in molding cavity CV. Then, molds 61 and 62 are closed and optical plate 71p is unitedly molded with energy curable resin to obtain molded body MP. Thereby, optical path length of the energy curable resin is shortened, and the optical property of the molded body MP is hardly affected by environmental change. A highly accurate molding transferability of the shape of optical surfaces 71j and 71k formed by injection molding, simultaneous molding of the opposing optical surfaces 71j and 71k, and securing alignment of the double-molded optical surfaces 71j and 71k are easily realized. Therefore, inexpensive optical element 71a can be molded with high efficiency.

## Description

### TECHNICAL FIELD

The present invention relates to a molding technique of an optical element. In particular, the present invention relates to a molding method for forming an optical element out of an energy curable resin, an optical element manufacturing method, and an arrayed optical element obtained by these methods.

### BACKGROUND ART

An optical element which is formed out of only resin by injecting molding, has the following disadvantages because of the physical property of the material: its refractive index changes owing to changes of a temperature and humidity and its optical property as a lens is easily affected by the environment. Therefore, the molded body formed out of only resin has a highly accurate molding transferability, but exhibits its excellent optical property under only a limited environment. So, the optical element has an environment stability which is inferior to expensive glass lenses manufactured by a method such as a glass molding.

To solve the problem, there has been provided wafer-level camera module lenses which are formed by cast-molding an energy curable resin on a glass plate (for example, in Patent Literatures 1 to 3). As an example, these lenses employ a quartz plate as the glass plate, and employ a ultraviolet curable resin as the energy curable resin for an optical surface.
Patent Literature 1: JP-B No. 3929479
Patent Literature 2: WO2004/027880
Patent Literature 3: WO2005/083789

### DISCLOSURE OF INVENTION

However, the molding method employed in each of Patent Literatures 1 to 3 is cast molding, and the molding method forms only one optical surface between the opposing optical surfaces of the glass plate. Further, when hardening ultraviolet curable resin, ultraviolet light is radiated to enter the ultraviolet curable resin from the side of the glass plate; or a mold is formed out of a transparent material such as quartz by being grinded and polished to be irradiated with ultraviolet light from the side of the mold. This molding method processes a single face, and is required twice for molding the opposing surfaces. Furthermore, when high pressure is applied on a resin in order to enhance the molding transferability by pushing the resin against a mold with high pressure as in injection molding, the inorganic material is pressed with high pressure from one direction and cracks. Thus, the molding process ends in failure. It is difficult to expect a shape-transferability with high accuracy. Especially, in a molding process for forming a lens shape with large thickness difference, a molded optical surface can have a large molding sink caused by cure shrinkage of resin, and remarkable deterioration of the shape-transferability is expected. Therefore, the thickness difference of the optical surface shape which is formed by the above molding method and is practical so as to keep its optical property, is estimated to be about 200 µm, and the method is considered to form just a remarkably thin optical surface shape, and application range of such the shape as an optical element is considered to be very narrow.

The present invention is achieved in order to provide a highly efficient molding method of an inexpensive optical element which exhibits an environment stability of an optical property approximately equivalent to that of an glass optical element.

Further, the present invention is achieved to provide an arrayed optical element formed by the above molding method.

The present invention is achieved also to provide a manufacturing method of an optical element using the above molding method and using the above arrayed optical element.

A molding method relating to the present invention, comprises: a first step of bringing a pair of molds including an optical transfer surface to be closed, after inserting an optical member formed of a transparent inorganic material between the pair of molds; a second step of forming an optical element by injecting an energy curable resin into a molding cavity formed when bringing the pair of molds to be closed; and a third step of bringing the pair of molds to be open and removing the optical element from the pair of molds. In the method, the optical transfer surface means an optical surface formed on a mold. When an optical member is transparent, it means that the optical member mostly transmits light which covers at least a wavelength range of light to be used for a molded optical element. For example, as for an optical element used within the visible light range, the optical element is transparent within a range covering at least the visible light range. As for an optical element used within an infrared radiation range, the optical element is transparent within a range covering at least the infrared radiation range. The inorganic material excludes organic materials whose main component is hydrocarbon, such as a resin material. The energy curable resin means a resin which is hardened when a curing reaction starts at an energy from the outside, such as heat, light, and electron ray. Similarly to the optical member, the energy curable resin mostly transmits light which covers at least a wavelength range of light to be used for a molded optical element. The optical elements includes a lens with smooth optical surfaces, and further includes a lens with a diffractive structure or fine structure, a prism, a phase control element, and a polarization optical element.

In the above molding method, an optical element is obtained by the following process: there is provided an optical element made of an inorganic material which has a stable optical property against an environmental change and is transparent, the optical element is inserted into a molding cavity, then, the molds is closed, and the optical element is molded together with an energy curable resin into one body. Thereby, an optical path length of the energy curable resin is shortened and the environmental change hardly affects the optical property of the molded body. Further, the method easily realizes highly accurate molding transferability of the optical surface shape which is molded by injection molding, simultaneous molding of opposing optical surfaces, and securing alignment of double-side-molded optical surfaces. Thus, an inexpensive optical element can be molded with high efficiency.

According to a concrete embodiment of the present invention, the molding cavity is formed on both sides of the optical element. In this case, molding pressure caused at the time of injection molding is applied on the whole periphery of the optical element in the manner of hydrostatic pressure, by forming the molding cavity on the both sides of the optical element. Therefore, the optical element receives just a compressive stress, and the optical element can be molded under high pressure without crack. Thus, the shape transferability is enhanced. The molding process results in a structure such that the optical member is sandwiched by resin layers. Even in the situation that bending stress causes in the optical member because of difference in coefficient of linear expansion between the optical member and the resin under a large change in temperature, the stress causes on the opposing surfaces to be offset each other, which prevents a warp and crack of the optical member.

According to another embodiment of the present invention, the molding cavity includes a channel groove for the energy curable resin. In this case, energy curable resin can be smoothly introduced into the molding cavity by arranging the channel groove on the molding cavity. Further, energy curable resin can be uniformly injected into every portions of the optical member, especially into an area opposing to a gate.

According to another embodiment of the present invention, the optical member has a shape of a flat plate. In this case, "the optical member has a shape of a flat plate" means that the optical member has the shape of a substantially parallel flat plate. When the optical member has the shape of a flat plate, it eliminates a shift error due to a displacement of the optical member in the molding cavity caused when the optical member is inserted into the molding cavity. Therefore, an optical element with less decentration can be molded with high accuracy, compared with the case that the optical member has a shape of lens.

According to another embodiment of the present invention, the optical member is formed of an optical glass. Optical glasses are usable for various purposes and have definite optical properties, which enables easy optical design.

According to another embodiment of the present invention, the optical member is formed of one of an optical crystal and a ceramic. Optical crystals have special properties such as: infrared transmittance and ultraviolet transmittance which differ from an ordinary optical glass and are high; high refractive index; and low dispersion, which bring various optical properties to the molded optical element. On the other hand, some ceramics have properties such as high infrared transmittance and high refractive index, which also bring various optical properties to the molded optical element, similarly to optical crystals.

According to another embodiment of the present invention, a shape of the optical transfer surface is aspheric. By forming the optical transfer surface to be aspheric, latitude in optical design increases, which increases the range of use of the optical element and also realizes optical elements with more excellent properties.

According to another embodiment of the present invention, an optical coating is formed on a surface of the optical member in advance. By forming an optical coating on a surface of the optical member, cracks in the optical coating can be prevented without increasing steps and time for the molding process, even if a multi-layer coating is applied on the surface, because the optical member provided as a substrate has an excellent stability against environmental change compared with resin material. Further, by providing a property of an optical filter with the optical element, the number of pars in an optical system can be reduced.

According to another embodiment of the present invention, a plurality of optical transfer surfaces are formed on the pair of molds to make an array. Thereby, a large number of optical surfaces can be formed simultaneously, and a large number of optical elements can be formed efficiently.

According to another embodiment of the present invention, the optical member has a shape of a plurality of lenses which face the optical transfer surfaces and are arranged to make an array. It enables to form an arrayed optical element with an excellent optical property.

An arrayed optical element relating to the present invention is formed by the above molding method.

In the arrayed optical element, by molding an optical member formed of an inorganic material which has a stable optical property against environment and is transparent, and an energy curable resin into one body, the optical path length of the energy curable resin can be shortened, and the optical property of the arrayed optical element is hardly affected by an environmental change. Further, the method easily realizes a highly accurate molding transferability of the shape of the optical surface which is molded by injection molding, molding of opposing optical surfaces simultaneously, and securing alignment of double-side-molded optical surfaces. Thus, the molded arrayed optical element is highly accurate and inexpensive.

An optical element manufacturing method relating to the present invention, comprises: a step of forming one of a reflection coating and an antireflection coating on a surface of the above arrayed optical element, before cutting the arrayed optical element up into pieces.

In the optical element manufacturing method, a reflection coating or antireflection coating is applied on the surface of the arrayed optical element before the arrayed optical element is cut up in to individual pieces. Thereby, the reflection coating or antireflection coating is applied to the pieces simultaneously, which reduces work burden.

According to a concrete embodiment of the present invention, an arrayed assembled lens is formed by layering a plurality of the arrayed optical elements. The positional relationship of the arrayed optical surfaces has been fixed accurately by the molds. Therefore, when the plural arrayed optical elements are aligned in terms of the whole body of each arrayed optical element in the layering step, the alignment of the optical surfaces of the arrayed optical element is automatically fixed, and a large number of assembled lenses can easily be assembled without decentration.

According to another embodiment of the present invention, the arrayed optical element comprises arrayed optical surfaces and is cut up along an area between the optical surfaces into pieces. By cutting the arrayed optical element up into individual pieces, a large number of individual optical elements can be manufactured efficiently.

According to another embodiment of the present invention, the optical member has a shape of a lens which faces the optical transfer surface. The shape of a lens is a shape so as to have a refractive surface as an optical surface. By providing the shape of a lens with the optical member, optical elements with excellent optical property can be formed.

### BRIEF DESCRIPTION OF DRAWINGS

Fig. 1 is a front view which conceptually illustrates the structure of an injection-molding apparatus.
Fig. 2A is a diagram which illustrates the inner surface side of a movable mold among molds for a molding process, Fig. 2B is a diagram which illustrates the inner surface side of a fixed mold among the molds for the molding process, and Fig. 2C is a diagram which illustrates the surroundings of the fixed mold and the movable mold.
Fig. 3A is a plan view of a lens array, Fig. 3B is a side view of the lens array, and Fig. 3C is a side view of an optical element which is cut out from the lens array.
Fig. 4 is a diagram which illustrates a modified example of the molds shown in Fig. 2.
Fig. 5 is a cross-sectional view which illustrates the structure of the lens array relating to the second embodiment.
Fig. 6 is a side cross-sectional view which illustrates the structure of an image pickup apparatus incorporating the optical element which is cut out from the lens array in Fig. 5.
Fig. 7A is a cross-sectional view showing the structure of a lens, and Fig. 7B is a diagram showing the spatial frequency characteristic.
Fig. 8 is a diagram showing comparative example of Fig. 7.
Fig. 9 shows a modified example of the fixed mold and movable mold in Fig. 2C.
Fig. 10 shows a modified example of the fixed mold and movable mold in Fig. 2C.

### REFERENCE SIGNS LIST

- 10: Injection molding machine
- 11: Fixed plate
- 12: Movable plate
- 13: Mold clamping plate
- 15: Mold opening/closing and mold clamping unit
- 20: Transfer unit
- 51: Temperature control unit
- 53: Decompression unit
- 16: Injection unit
- 16d: Injection end
- 61: Fixed mold
- 62: Movable mold
- 63a: O-ring
- 71, 171, 171q, 171r: Lens array
- 71a, 172a, 173a: Optical element
- 71p, 172p, 173p: Optical plate
- SM: Resin seal
- 100: Injection molding apparatus
- CV: Molding cavity
- GA: Gate
- PC: Partial cavity
- V: Valve
- MP: Molded body

### BEST MODE FOR CARRYING OUT THE INVENTION

### [First embodiment]

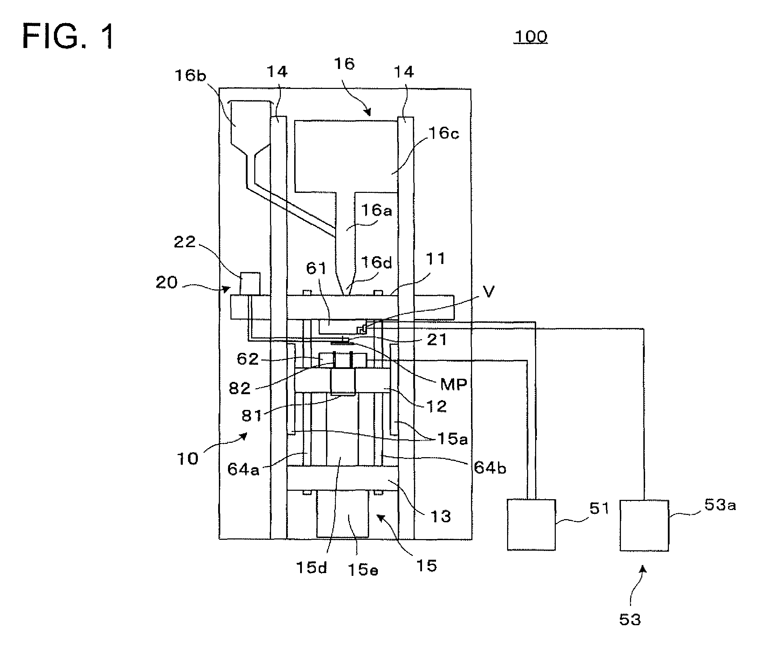

The molding method and optical element manufacturing method of the first embodiment of the present invention will be described referring to the drawings. Fig. 1 is a front view which conceptually illustrates the structure of an injection-molding apparatus for carrying out the molding method of the present embodiment.

Injection molding apparatus 100 of the present embodiment is provided with injection molding machine 10, transfer unit 20, temperature control unit 51, and decompression unit 53. Injection molding machine 10 is a part which performs injection molding to form molded body MP. Transfer unit 20 is a part which sets the optical plate, which will be mentioned later, in injection molding machine 10 and which takes out molded body MP from injection molding machine 10. Temperature control unit 51 is a part which adjusts the temperature of molds 61 and 62 of injection molding machine 10. Decompression unit 53 is a part which carries out vacuum suction of the inside of molds 61 and 62 of injection molding machine 10. In the embodiment, injection molding apparatus 100 employs the vertical direction for mold opening and mold closing operations.

Injection molding machine 10 is provided with fixed plate 11, movable plate 12, mold clamping plate 13, opening/closing drive 15, and injection unit 16.
Injection molding machine 10 pinches fixed mold 61 as a first mold and movable mold 62 as a second mold, at a position between fixed plate 11 and movable plate 12. The injection molding machine 10 realizes a molding process by clamping the molds 61 and 62.

Fixed plate 11 is fixed to the vertically central portion of supporting frame 14, and supports transfer unit 20 at one end. The inner side (bottom side) of the fixed plate 11 removably supports fixed mold 61, and faces the inner side of the movable plate 12. Fixed plate 11 is fixed to mold clamping plate 13 via tie bars 64a and 64b, and supports mold clamping plate 13.

Each of tie bars 64a and 64b is disposed between fixed plate 11 and mold clamping plate 13. There are actually provided two tie bars 64a and two tie bars 64b. The tie bars are supported at the four corners of fixed plate 11 and the four corners of mold clamping plate 13, and extend in parallel with each other in the vertical direction. Through-holes where tie bars 64a and 64b penetrate are formed at the four corners of movable plate 12. The movable plate 12 is slidable on the tie bars 64a and 64b.

Movable plate 12 is supported by slide guide 15a mentioned later so as to be movable forward and backward, in the other words, to be able to go up and down, compared with fixed plate 11. The inner side (upper surface) of movable plate 12 removably supports movable mold 62, and faces the inner side of fixed plate 11. Ejector 81 is built into movable plate 12. The ejector 81 pushes out molded body MP which remains in movable mold 62 at the time of mold releasing, out of movable mold 62 to enables a transfer by transfer unit 20.

Mold clamping plate 13 is fixed to the lower portion of supporting frame 14, and the position of the mold clamping plate 13 is adjustable in the upward and downward direction in which tie bars 64a and 64b extend, which enables the interval adjustment of fixed plate 11 and movable plate 12. Mold clamping plate 13 supports movable plate 12 from the lower side via power transmission 15d of mold opening/closing drive 15 at the time of mold clamping. In this state, mold clamping plate 13 is hung between tie bars 64a and 64b so as to resist pressure of mold clamping (namely, lock-up) at the time of the molding.

Mold opening/closing drive 15 is provided with slide guide 15a, power transmission 15d, and actuator 15e. Slide guide 15a is provided between supporting frame 14 and movable plate 12, to enables movable plate 12 to reciprocate smoothly in forward and backward directions, in other words, in upward and downward directions, compared with fixed plate 11. Power transmission 15d is structured by a toggle link, and expands and contracts in response to the drive force from actuator 15e. Thereby, movable plate 12 moves upward and downward, and movable plate 12 freely moves so as to approach or to be separated from mold clamping plate 13. As a result, movable plate 12 and fixed plate 11 can be tightly fastened so that they may approach mutually.

The above mold opening/closing drive 15 can close fixed mold 61 and movable mold 62 sandwiched by fixed plate 11 and movable plate 12, or can separate movable plate 12 and fixed plate 11 away from each other to open fixed mold 61 and movable mold 62 which are clamped by fixed plate 11 and movable plate 12. When closing the molds, the above mold opening/closing drive 15 can push movable plate 12 against fixed plate 11 with great pressure by drive of actuator 15e, and can clamp fixed mold 61 and movable mold 62 by sufficient pressure power.

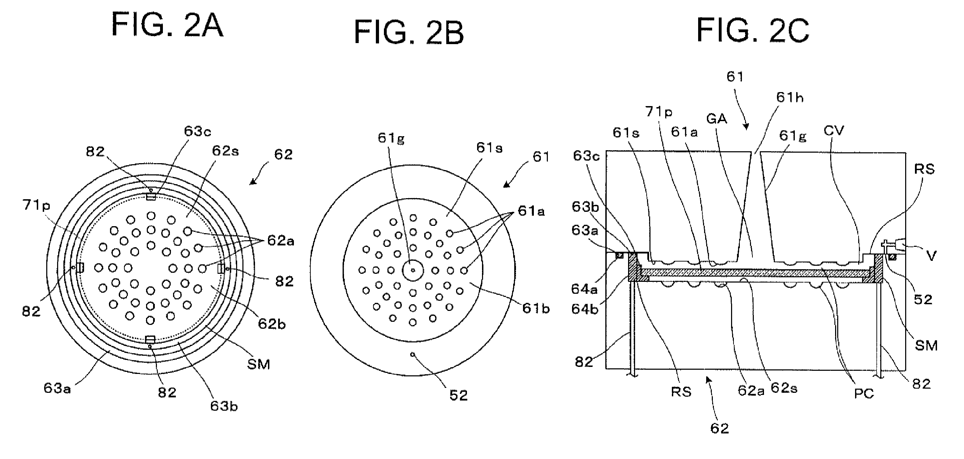

Injection unit 16 is provided with cylinder 16a, raw material storing section 16b, screw drive section 16c, and can discharge liquid resin from injection end 16b under the condition that temperature of the liquid resin is controlled. Injection unit 16 can removably connect injection end 16d of cylinder 16 to gate GA (will be mentioned later) of fixed plate 11. Injection unit 16 can supply liquid resin via fixed plate 11 into molding cavity CV (refer to Fig. 2) formed under the condition that fixed mold 61 and movable mold 62 are clamped, with desired timing and under desired pressure.

Transfer unit 20 is equipped with hand 21 which can stick or hold optical plate 71p or molded body MP mentioned later, and with 3-dimensional drive 22 which moves the hand 21 in three dimensions. Transfer units 20 owns a role which carries optical plate 71p from the outside and puts it on movable mold 62 before the molding step, and further owns a role which holds molded body MP remaining on fixed mold 61 or movable mold 62 and carries it to the outside when fixed mold 61 and movable mold 62 are separated to be open.

Temperature control unit 51 controls temperatures of fixed mold 61 and movable mold 62. Specifically, heaters are buried in fixed mold 61 and movable mold 62. Fixed mold 61 and movable mold 62 are heated to a required temperature, to harden an energy curable resin such as thermosetting resin which has been injected into molding cavity CV formed between fixed mold 61 and movable mold 62.

Decompression unit 53 is equipped with vacuum pump 53a which enables to evacuate molding cavity CV formed by fixed mold 61 and movable mold 62, and valve V which opens and closes an exhaust path extending from vacuum pump 53a. The vacuum pump 53a is connected through valve V to hole 52 (refer to Fig. 2) which is formed on fixed mold 61 for creating a vacuum and will be described later. The vacuum pump 53a can extract the air in the molding cavity CV through the hole 52.

Hereafter, molds for the molding process relating the first embodiment of the invention will be explained, referring to the drawings. Fig. 2A is a diagram which illustrates the inner surface side of a movable mold 62 among molds for a molding process, Fig. 2B is a diagram which illustrates the inner surface side of fixed mold 61 among the molds for the molding process, and Fig. 2C is a front sectional view which illustrates the surroundings of fixed mold 61 and movable mold 62.

By joining and clamping fixed mold 61 and movable mold 62 together, there is formed molding cavity CV which is equivalent to the area between the both of fixed mold 61 and movable mold 62 and has a disk shape. By filling the molding cavity CV with a material such as thermosetting resin and ultraviolet curable resin representing an energy curable resin, then, carrying out a treatment such as heat treatment and ultraviolet treatment, molded body MP (refer to Fig. 1) can be formed. As the thermosetting resins, there are, for example, silicone resin, allyl ester, acrylics system resin, an epoxy resin, polyimide, and urethane system resin. As the ultraviolet curable resins, there are, for example, silicone resin, acrylics system resin, an epoxy resin, polyimide, and urethane system resin.

As shown in Figs. 2B and 2C, fixed mold 61 has a cylindrical outside, and includes a plurality of element transfer sections 61a and a support transfer section 61b on mold face 61s at the inner side, where the element transfer sections 61a are two-dimensionally arranged, namely are arranged to make an array, and the support transfer section 61b connects between these element transfer sections 61a. Each of the element transfer sections 61a is an optical transfer surface corresponding to each lens element constructing molded body MP and owns a circular outer periphery.

Moreover, fixed mold 61 is also equipped with hole 52 for creating a vacuum. There is formed sprue 61g for injecting resin at the center of fixed mold 61. The tip part of sprue 61g facing molding cavity CV, serves as gate GA as an entrance for injecting resin. Gates GA is formed at the position corresponding to the center of molded body MP in this case.

As shown in Figs. 2A and 2C, movable mold 62 has a cylindrical outside, and includes a plurality of element transfer section 62a and a support transfer section 62b on mold face 62s at the inner side, where the element transfer section 62a are two-dimensionally arranged, namely are arranged to make an array, and the support transfer section 62b connects between these element transfer sections 62a. Each of the element transfer sections 61a is an optical transfer surface to be positioned to face element transfer sections 61a of fixed mold 61, and owns a circular outer periphery.

Movable mold 62 is further equipped with O-ring 63a which is a first sealing member arranged at the outside of mold face 62s. O-ring 63a has a ringed shape and is fitted to a circumferential groove on movable mold 62. For O-ring 63a, the material which can maintain the airtightness of molding cavity CV and does not generate gas is employed. For example, a fluoro-resin can be employed.

Movable mold 62 is further equipped with resin seal SM which is a second ceiling member between mold face 62s and O-ring 63a. Resin seal SM includes seal body 63b and protrusion 63c. The seal body 63b has a ringed shape and is fitted to circumferential groove formed on movable mold 62. On the other hand, protrusion 63c is a bit with a step, and is fixed on the inner side portion in view of the radial direction of seal body 63b to be one body. The glass optical plate 71p which is an optical element and will be described later, is fitted to the stepped portion. For resin seal SM, a material with the property such that the material is not eroded by energy curable resin to be sealed. For example, silicone resin, fluoro resin, polyimide, polyamide-imide, 66 nylon, and perfluoro elastomer are used. Protrusion 63c can be formed as a one body with seal body 63b. Alternatively, it can be formed on movable mold 62.

A plurality of ejector pins 82 are arranged on movable mold 62 at the position corresponding to seal body 63b. These ejector pins 82 are connected with ejector 81 shown in Fig. 1. Ejector pins 82 perpendicularly penetrate ringshaped surface RS arranged at the outside of mold face 62s of movable mold 62 to be movable upward and downward.

As shown in Fig. 2C, molding cavity CV is formed by closing and clamping fixed mold 61 and movable mold 62. When molding cavity CV is formed, partial cavities PC corresponding to respective lens elements are formed by element transfer sections 61a and 62a. In Fig. 2 (C), element transfer sections 61a and 62a are simplified by omitting some details.

Optical plate 71p which is supported by resin seal SM is inserted between fixed mold 61 and movable mold 62. The optical plate 71p is a thin board obtained by grinding and polishing one of various optical glasses, and an optical coating such as an infrared reflection coating is formed on its surface in advance. Optical plate 71p has a peripheral shape which is slightly smaller than molding cavity CV. When optical plate 71p is inserted into resin seal SM, a narrow space is created between optical plate 71p and seal body 63b. Resin runs in the rear side of the optical plate 71p through the narrow space, and a part of molding cavity CV at the side of movable mold 62 is filled with the resin. When molding cavity CV is filled up with the resin, optical plate 71p reaches a state of sinking in the resin which fills molding cavity CV. Therefore, the specific gravity of optical plate 71p is preferably larger than the resin. When the specific gravity is smaller than that of the resin, optical plate 71p shows a tendency to move upward in the molding cavity during hardening the resin, because of buoyancy caused after the resin is injected. Therefore, it is possible that variation in the position of the optical glass in the optical element arises and the molding result becomes unstable.

Hereafter, the molding method with molds 61 and 62 shown in Figs. 1 and 2 will be described concretely.

First, in injection molding machine 10 of Fig. 1, resin seal SM is set on movable mold 62 using hand 21 of transfer unit 20, and optical plate 71p is inserted in this resin seal SM.

Then, injection molding machine 10 carries out the first mold clamping, and molding cavity CV is formed between fixed mold 61 and movable mold 62. At this time, the contacting portions of O-ring 63a and fixed mold 61 is in a state of firmly attaching together, without the mating surfaces of fixed mold 61 and movable mold 62 attaching together. That is, in the condition of the first mold clamping position, the interior of molding cavity CV reaches a state that airtightness is maintained with O-ring 63a. Under this state, injection end 16d of ejection unit 16 of Fig. 1 is made to contact airtightly to resin injection hole 61h of fixed mold 61, then, valve V is open. By vacuum pump 53a, the air in molding cavity CV is discharged from hole 52 which exists inside O-ring 63a, and decompression in molding cavity CV is performed.

After the vacuum has been created, the second mold clamping is carried out, wherein mating surfaces of fixed mold 61 and movable mold 62 are not firmly attached together and the contacting portions of seal body 63b and ring shaped surface RS of fixed mold 61 reach a state that they firmly attach together. That is, under the state at the position of the second mold clamping, molding cavity CV is sealed up by seal body 63b. Then, a material representing an energy curable resin such as thermosetting resin is injected into molding cavity CV from injection unit 16.

After molding cavity CV is filled up with the thermosetting resin, molds 61 and 62 are heated and the thermosetting resin is hardened. Before the hardening of the thermosetting resin is completed, the third mold clamping is carried out by injection unit 16, and mating surfaces of fixed mold 61 and movable mold 62 reach a state of attaching firmly together. That is, compression molding has been carried out under the condition of the third mold clamping position.

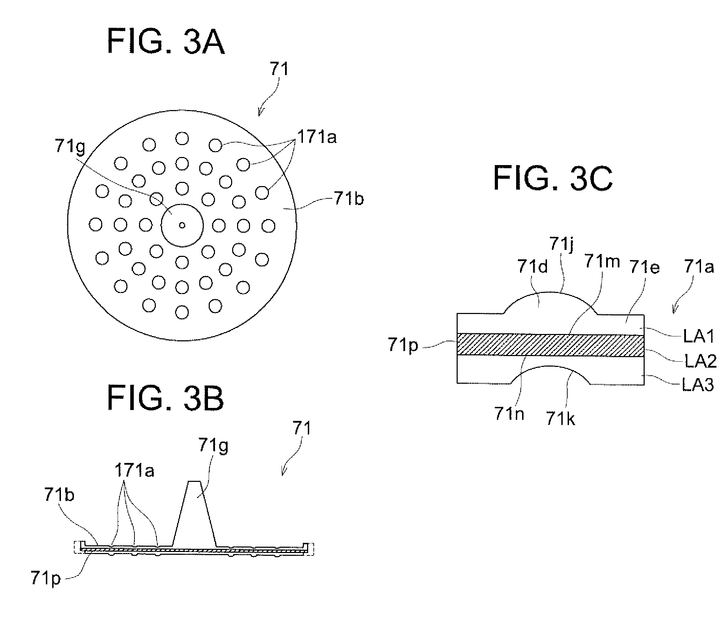

After the hardening of the thermosetting resin has been completed, the molds are brought to be open. Then, sprue 71g of molded body MP (refer to Fig. 3) is held by hand 21 and seal body 63b is pushed out by ejector pins 82. Thereby, molded body MP is removed from movable mold 62.

Hereafter, the manufacturing method of an optical element out of molded body MP which is molded by injection-molding apparatus 100 of Fig. 1 will be described.

As for molded body MP removed from movable mold 62, treatment such that an antireflection coating and reflection coating is applied on its surface before molded body MP is cut up into individual pieces. Herein, the target wavelength can be any one of ultraviolet ray, visible ray and infrared ray, but it requires only a multi-layered coating which does not cause a problem such as generation of cracks.

Fig. 3 shows diagrams which illustrate molded body MP, namely a lens array, molded by injection-molding apparatus 100 of Fig. 1. Fig. 3A is a plan view of lens array 71. Fig. 3B is a side view of lens array 71. Fig. 3C is a side view of an optical element that is cut out from lens array 71.

Lens array 71 shown in Fig. 3A and Fig. 3B has a disk-shaped outside. The lens array is provided with a plurality of arrayed optical element portions 171a which are two-dimensionally arranged, and with supporting body 71b connecting between the optical element portions 171a.
Optical element portions 171a correspond to element transfer sections 61a and 61b arranged on molds 61 and 62. Supporting body 71b corresponds to support transfer sections 61a and 62b. Sprue 71g in triangular pyramid shape is formed at the center of the lens array 71. The lens array is separated into individual pieces by being cut up, to be formed into optical elements 71a, namely lenses, each of which is shown in Fig. 3.

In the lens shown in Fig. 3C, optical element 71a includes optical element body 71d and flange 71e. Optical element body 71d corresponds to optical element portion 171a shown in Fig. 3A, and flange 71e corresponds to the rest portion created after cutting supporting body 71b off. In another viewpoint, optical element 71a has a structure in which first layer LA1, second layer LA2, and third layer LA3 are laminated. The upper surface of optical element body 71d is first optical surface 71j which is convex, and the bottom surface of optical element 71d is fourth optical surface 71k which is concave. The upper surface of optical plate 71p, that is the boundary of first layer LA1 and second layer LA2, forms second optical surface 71m. The bottom surface of optical plate 71p, that is the boundary of second layer LA2 and third layer LA3, forms third optical surface 71n.

In summary, in injection-molding apparatus 100 of Fig. 1, by inserting optical plate 71p into molding cavity CV and molding the plate with energy curable resin together into one body, optical element 71a with the structure that second layer LA2 which is optical plate 71p is sandwiched by first and third layers LA1 and LA3 formed of resin. Because optical element 71a provides such the structure, the optical path length of the resin portion is shortened and optical properties of optical element 71a are hardly affected by environmental change. Further, the injection molding easily realizes all of molding transferability of optical surfaces 71j and 71k with highly accuracy, simultaneous molding of opposing optical surfaces 71j and 71k, and securing alignment of double-side-molded optical surfaces 71j and 71k. Thus, inexpensive optical elements can be molded with highly efficiency.

Further, in the injection molding process, injecting resin into molding cavity CV at high pressure provides compression stress to the inside of resin. Therefore, even if the resin shrinks in molding cavity CV because of its hardening reaction, a state that the resin is tightly attached with the both of molds 61 and 62 can be maintained due to the pressure stress, and the highly accurate molding transferability of the mold shape can be obtained. Further, an energy curable resin is generally a resin material with low viscosity, and can apply a molding pressure to the whole of the molding cavity CV in the manner of hydrostatic pressure in the injection molding process. Therefore, a great number of molded bodies MP in which partial cavities PC are arranged to make an array can be formed by injection molding, without designing positions of runners and gates with high accuracy as in the molding process employing a resin with remarkably high viscosity. As a result, molded body MP and optical element 71a with highly accurate shape can be molded with an excellent efficiency at low cost. Further, by employing a resin with low viscosity and high fluidity, the resin easily runs into fine area of the molds when molding an optical surface with diffraction grooves or a fine structure that is smaller than the wavelength in size, and exhibits an excellent molding transferability compared with a thermosetting resin.

Since the viscosity of the energy curable resin to be formed by injection molding is low (generally, 100 to 2000 m Pa·s), the resin reaches all of the front and back surfaces and peripheral surface of optical plate 71p in molding cavity CV, and molding pressure is applied on optical plate 71p from the all directions in the manner of hydrostatic pressure. Most of inorganic materials exhibit great hardness against such the compressive force uniformly applied from all the directions, and are not damaged even when a pressure of 50 to 100 Mpa is applied as the compression pressure. Therefore, under the condition that the compression pressure is applied to the energy curable resin, the energy curable resin can be hardened and molded with optical plate 71p supported in movable mold 62. Therefore, the injection molding can be carried out even if the optical plate 71p is inserted in molding cavity CV.

By carrying out a vacuum molding in which a vacuum is created in molding cavity CV when the injection molding is carried out, optical plate 71p does not block the flow of the resin and air bubbles do not substantially remain in the resin. Therefore, it enhances the yield and realizes a secure molding process.

Optical plate 71p which is a flat plate in shape does not cause a shift error resulting from a displacement of the optical plate 71p in molding cavity when the optical plate 71p is inserted in the molding cavity CV. Thereby, the molding process can be easily carried out compared with the situation of employing optical plate 71p in a lens shape. Therefore, even if optical plate 71p in a shape of flat plate floats up in a molding process because of a few of inequality of the molding pressure, the position accuracy of the plate along the optical axis hardly affects its optical property because it is a parallel flat plate in shape. So, the optical properties of the optical elements are not affected by the variation of molding condition, and the optical elements can be molded stably. As a result, it enables to enhance the yield and to provide optical elements with high accuracy and high quality at a low cost.

By applying an optical coating on the surface of optical plate 71p in advance, it can prevent crack and pealing of the coating resulting from environmental change caused after the coating is applied, because most materials of optical coatings are inorganic materials and exhibit excellent adhesion, and because the optical plate 71p has a smaller linear expansion coefficient and hardly absorb moisture. Further, because optical plate 71p is sealed in the resin by injection molding, environmental change such that moisture absorption can be avoided.

By arranging element transfer sections 61a and 62a of molds 61 and 62 to make an array, a large number of optical surfaces cab be molded with extremely high efficiency.

Further, a operation for applying an optical coating on the surface of the molded body MP can be completed at one time by applying the optical coating on a large number of optical elements portions 171a which are not cut up yet and are provided as one body in an arrayed shape. Such the operation substantially reduces monotonous and complicated operations such that small optical elements which have been formed into separated pieces are arrayed on a coating jig piece by piece, then, the jig is carefully set to a film forming chamber to forming the coating, and coated optical elements are taken out from the coating jig piece by piece, again. Especially, when considering an arrayed shape in which about a hundred of optical element portions 171a are formed, the amount of steps to attach and detach the optical element portions on/from the coating jig becomes a hundredth, and handling of molded body MP, namely lens array 71 becomes easy because the molded body is large to some extent. It means that the work burden becomes smaller than a hundredth.

Further, by cutting lens array 71 up into individual pieces, a large number of separated optical elements 71 can be manufactured with excellent efficiency.

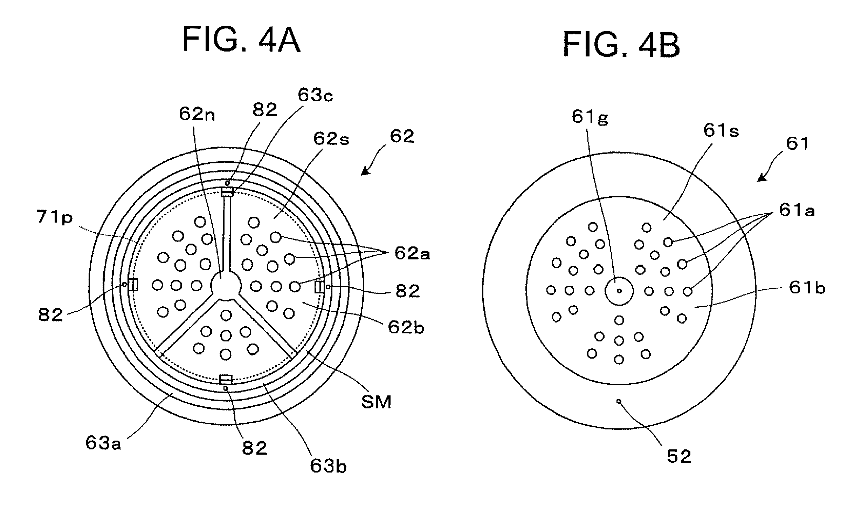

Fig. 4 is a diagram which illustrates modified example of molds 61 and 62 shown in Fig. 2. As shown in Fig. 4, channel groove 62n can be formed on mold face 62s of movable mold 62. Thereby, molding cavity CV at the side of movable mold 62 is quickly filled up with the resin, because the resin enters the molding cavity through channel groove 62n. Thus, a thermosetting resin can be uniformly injected into the space at the movable mold 62 side of optical plate 71p at short time. Further, since noncircular protrusion 63c is formed on movable mold 62, arc-shaped spaces are formed at a portion which exclude protrusion 63c and extends between the peripheral end of the inserted optical plate 71p and seal body 63b, and the resin runs through the spaces into the area at the movable mold 62 side in short time.

### [Example 1]

The present example provides a glass plate on which an infrared reflection coating with thirty-four layers is applied as optical plate 71p. In the injection molding process of a single lens, the optical plate 71p is inserted between a pair of molds 61 and 62 and opposing surfaces of the lens are molded at one time, to form optical element 71a as a lens system structured by one optical member. As a comparative example, there is provided a lens system structured by two optical members, where the lens system is a single-lens image pickup lens for VGA including one filter formed by applying an infrared reflection coating on a glass substrate additionally to a lens.

An example that an optical coating is applied on optical plate 71p in advance, will be described bellow. As for an image pickup lens for forming an image onto a CCD image pickup element, as an example, CCD exhibits high infrared sensitivity and an infrared reflection coating which removes infrared rays from an imaged light is required in order to reduce the infrared sensitivity. For providing an infrared reflection coating which transmits 90% or more of visible ray and exhibits reflectance as high as 90% or more for infrared ray, dielectric materials generally need to be layered for the coating to form thirty to forty layers. In such the multilayered coating, internal stress caused when respective layers are layered is accumulated and strong stress inheres in the whole of coated layers. Therefore, when a base material expands or shrinks, the layers easily crack and a great number of cracks are created. These cracks should not exist in an image forming lens, because the cracks scatter transmitting light and considerably reduce the contrast of an image. When a resin material is prepared for a base member and such the high-performance optical coating is applied on the surface of the base member, the base member expands or shrinks because of temperature or humidity and cracks are easily created. Therefore, it requires a new filter member formed by applying an infrared coating on a member formed of an inorganic material such as a glass plate, to be inserted into the lens system.

In the present example, such the high-performance optical coating can be previously applied on optical plate 71p before the optical plate is molded with resin as a lens, without creating cracks and without increasing preparations and time for the molding process. The number of members in the optical system can also be reduced.

In the present example, an antireflection coating was not applied on the surface of the glass plate opposing to the infrared reflection coating. When the resin member and a glass plate were provided as separated bodies, light was reflected on the surface. Because the refractive indexes of the resin and glass plate are 1.51 and almost the same to each other, the reflection of light on the surface was almost lost in the present example, which enhanced a contrast sensitivity (MTF) by about 8% depending on an imaging area and provided an image forming property with extremely high contrast and excellent sharpness. Further, as for a property variation (specifically, focal point movement) resulting from temperature change, the single lens in the present invention exhibited a change amount reduced by half because the thickness of the resin reduced due to an existence of the glass plate which is optical plate 71p. Thereby, the lens could maintain sufficient performance as a fixed-focus optical system. Further, the distance between the molded lens and CCD was shortened because there was no filter, which realized an light-weight and compact image pickup camera with short total length and provided a large design superiority to applications such that mobile phone, in which design constraint in the thickness direction is severe.

### [Second embodiment]

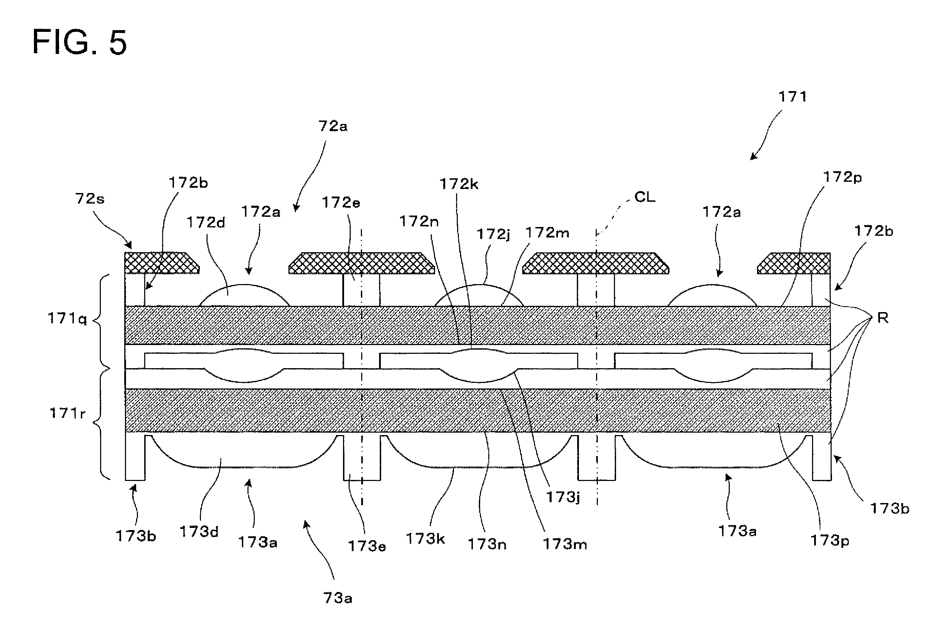

Fig. 5 is a cross-sectional view which illustrates the structure of the layered lens array relating to the second embodiment. The lens array in the second embodiment is formed by partially changing lens array 71 of the first embodiment and layering the lens arrays. Elements which are not especially described are the same as those of the first embodiment.

Lens array 171 is an assembled lens formed by layering and adhering diaphragm plate 72s and two lens arrays 171q and 171r molded with injection molding apparatus 100 of Fig. 1. Each of lens arrays 171q and 171r and diaphragm plate 72s are formed by injection molding with corresponding molds 61 and 62 and injection-molding apparatus 100.

Lens array 171q is provided with a plurality of optical element portions 72a arranged to make an array, and with supporting body 172b which connects between these optical element portions 72a. On the other hand, lens array 171r is provided with a plurality of optical element portions 73a arranged to make an array, and with supporting body 173b which connects between these optical element portions 73a. Optical element 172a is provided with optical element body 172d and flange 172e and optical element 173a is provided with optical element body 173d and flange 173e. Optical element bodies 172d and 173d correspond to optical element portions 72a and 73a. Flanges 172e and 173e are portions remained when supporting bodies 172b and 173b are cut off. In another viewpoint, each of optical elements 172a and 173a has the structure in which each of optical plates 172p and 173p are sandwiched between two resin layers arranged at the upper side and lower side. The upper side of optical element body 172d serves as a first optical surface 172j, and the upper side of optical plate 172p serves as a second optical surface 172m. The bottom side of optical plate 172p serves as a third optical surface 172n. The bottom side of optical element body 172d serves as a fourth optical surface 172k. The upper side of optical element body 173d serves as a first optical surface 173j, and the upper side of optical plate 173p serves as a second optical surface 173m. The bottom side of optical plate 173p serves as a third optical surface 173n, and the bottom side of optical element body 173d serves as a fourth optical surface 173k.

Supporting body 172b and 173b formed in lens arrays 171q and 171r, respectively, are formed as one body with optical element portions 72a and 73b or are formed as separately bodies from optical element portions 72a and 73b, to become connecting portions R for lens arrays 171q and 171r and diaphragm plate 72s. Spacing between lens arrays 171q and 171r and diaphragm plate 72s are fixed by the connecting portions R.

Diaphragm plate 72s is molded out of resin in which light absorbing components are added. Diaphragm plate 72s is fixed on lens array 171q. Diaphragm 72 prevents unwanted light entering optical elements 172a and 173a.

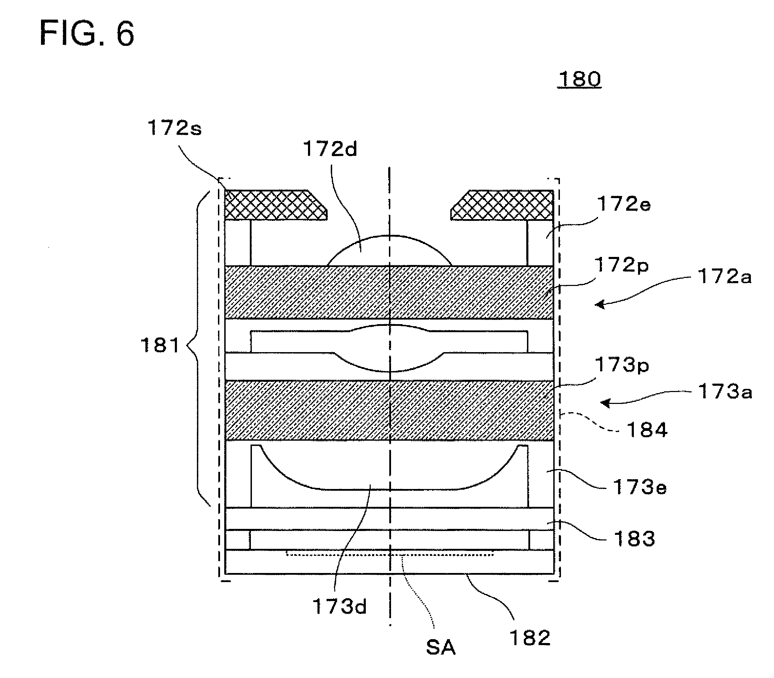

Lens arrays 171q and 171r and diaphragm plate 72s are layered in the condition to be aligned with connecting portions R, and are fixed by adhesive. Lens arrays 171 are separated into individual pieces by being cut along broken lines CL shown in Fig. 5, to be formed into optical elements 172a and 173a shown in Fig. 6, namely lenses.

Fig. 6 is a side cross-sectional view which illustrates the structure of an image pickup apparatus incorporating image forming section 181 which is cut out from lens array 171 in Fig. 5.

Image pickup apparatus 180 is an apparatus in a rectangular parallelepiped shape and includes image forming section 181 for forming an image, cover glass 183, image pickup element 182 for detecting the image formed by the image forming section 181.

Image forming section 181 is an optical element unit for image formation, and is provided with optical elements 172a and 173a corresponding to lens arrays 171q and 171r, and diaphragm plate 172s corresponding to diaphragm 72s. In the other words, image forming section 181 is a two-element lens and includes eight optical surfaces.

Cover glass 183 is joined to image pickup element 182 through a spacer, and prevents dust entering image pickup element 182.

Image pickup element 182 is a circuit chip in which a semiconductor integrated circuit containing a device such as a CMOS-type image sensor is formed on the surface. Image pickup element 182 includes light-receiving area SA on the top side, for converting a projected image into electric signal. Image pickup element 182 is fixed to cover glass 183 by adhesive.

Although omitted in the above description, shielding body 184 can also be formed in the side surface of image forming section 181 or image pickup element 182. Shielding body 184 can be provided as a cylindrical member and be fixed on the circumference of image forming section 181. Alternatively, shielding body 184 can be provided as a casing and have a structure to house image forming section 181 therein.

In the lens arrays described above, lens arrays 171q and 171r and diaphragm plate 72s are assembled before they are cut up, which saves time and effort spent when assembling optical elements separated into individual pieces while adjusting their optical axis piece by piece. Positional relationship of optical surfaces 172j, 172k, 172m, 172n, 173j 173k, 173m, and 173n are accurately defined by molds 61 and 62. Therefore, when the whole bodies of lens arrays are aligned once at the time of layering them, adjustment of the optical axes for optical surfaces 172j, 172k, 172m, 172n, 173j 173k, 173m, and 173n arranged in the molded bodies is automatically completed. As a result, a plurality of assembled lenses can be assembled extremely easily.

Lens arrays 171q and 171r in Fig. 5 employed supporting body 172b and 173b as connecting portions R. Alternatively, the lens arrays may prepare the connecting portion R by layering a separated member such as a spacer thereon. In this case, by providing dowel fitting portion so as to fix the layering position of the spacer and lens array 171, the assembly is not carried out without adjustment.

Diaphragm plates 72s and 172s can be glass plates on which a chromium coating for reflecting an unwanted light is applied on their surface.

### [Example 2]

Hereafter, a concrete example of the lens unit of the second embodiment will be described.

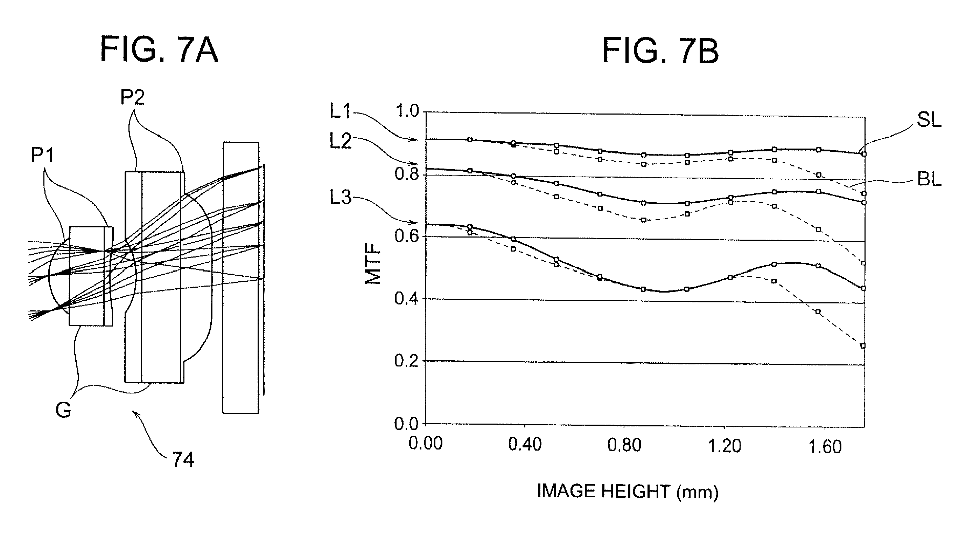

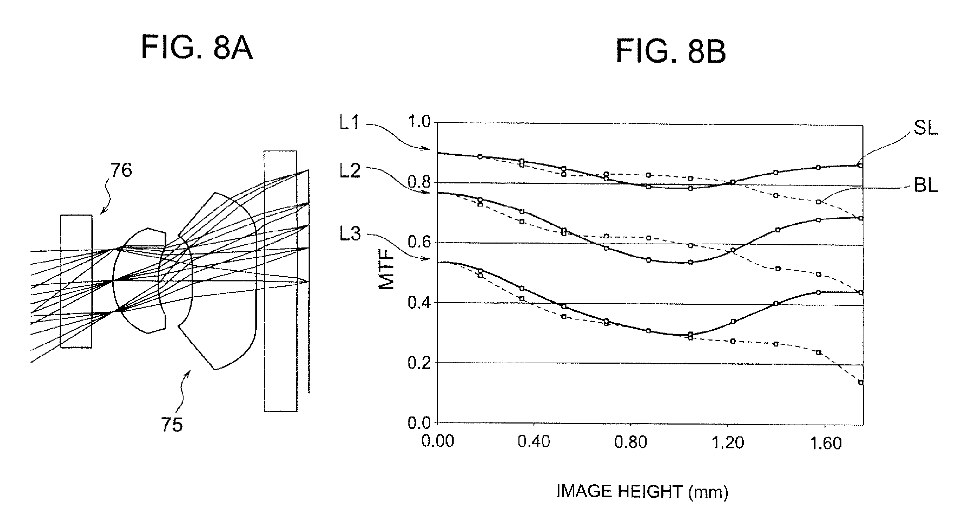

Fig. 7 shows diagrams which illustrate a performance of an image pickup lens in which a glass plate is sandwiched by resin. Fig. 7A is a cross-sectional view showing the structure of the lens, and Fig. 7B is a diagram showing the spatial frequency characteristic. Fig. 8 shows a comparative example to Fig. 7 and shows diagrams which illustrate a performance of an image pickup lens formed just of resin. Fig. 8A is a cross-sectional view showing the structure of the lens, and Fig. 8B is a diagram showing the spatial frequency characteristic. In Figs. 7 and 8, the horizontal axis shows an image height and the vertical axis shows a contrast sensitivity (MTF). In Figs. 7A and 8A, solid curve SL represents the spatial frequency characteristic in the sagittal direction, and broken curve BL represents the spatial frequency characteristic in the tangential direction. Among these curves, data L3, L2, and L1 represent MTF at 1/2, 1/4, and 1/8 of the Nyquist frequency, respectively. In Fig. 7A, focal length of the optical system is 3.0, the total length of the optical system is 3.2, FNO of lens 74 is 2.88, refractive index of resin P1 is 1.48, refractive index of resin P2 is 1.59, and refractive index of glass G is 1.52. On the other hand, in Fig. 8A, focal length of the optical system is 2.8, the total length of the optical system is 3.2, FNO of lens 75 is 2.88, and refractive index is 1.53. Conditions of optical systems of Figs. 7A and 8A are optimized to respective optical systems. The optical system of Fig. 8A includes an infrared reflection filter at the incident side of lens 75.

When Fig. 7B is compared with Fig. 8B, it can be seen that the value of MTF of Fig. 7B is larger. That is, the image pickup lens of Fig. 7A has the image forming performance with higher contrast.

The maximum thickness of the resin in Fig. 7A is about 0.46 mm, and the thickness of the resin in Fig. 8A is about 1.0 mm. By putting optical plate 71p between resin members, it enables to reduce the thickness of the resin portion even in a comparably thick lens.

Although the present invention has been described based on the embodiments above, the present invention is not limited to the above embodiments and various modifications can be employed. For example, a thermosetting resin was employed for the energy curable resin and the resin has been hardened by heating molds 61 and 62. However, in another example employing ultraviolet curable resin, the resin can be hardened by performing treatment adapted to the nature of each resin, such as radiation of ultraviolet ray at the time of molding. Specifically, when injection molding is carried out with ultraviolet curable resin, movable mold 62 with transparency is prepared in order to irradiate the inside of molding cavity CV with ultraviolet ray.

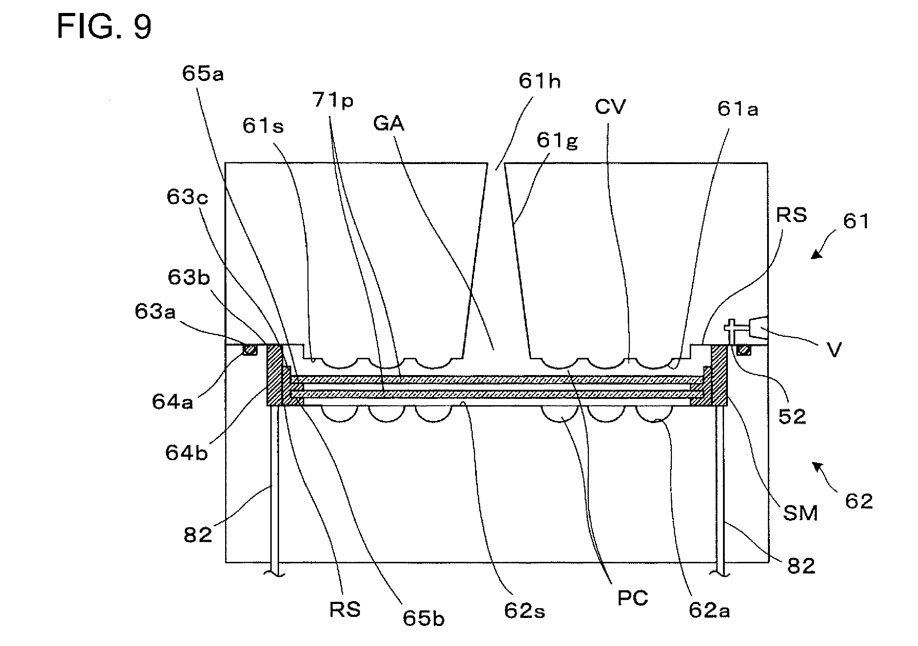

In the above embodiment, one optical plate 71p was inserted in molding cavity CV. Alternatively, two optical plates 71p can be inserted in molding cavity CV as shown in Fig. 9. In this case, two steps 65a and 65b need to be arranged on protrusion 63c of resin seal SM. By fitting optical plates 71p to steps 65a and 65b, respectively, narrow spaces are created between the optical plates 71p and seal body 63b and the resin can be injected into a space between the two optical plates 71p. The number of optical plates 71p can be changed according to the application.

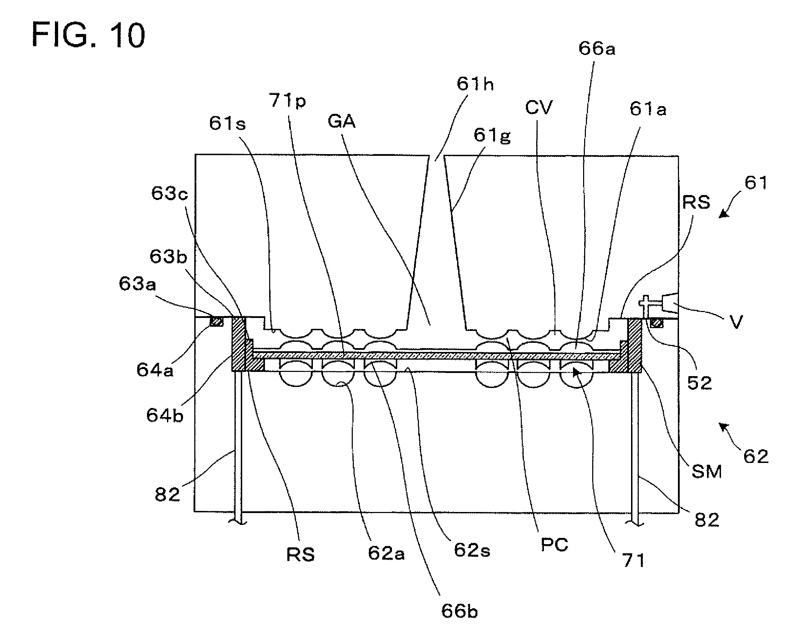

In the above embodiments, optical plate 71p was inserted in molding cavity CV, and lens array 71 can be inserted alternatively as shown in Fig. 10. Lens array 71 includes resin layers 66a and 66b on the opposing surfaces and another resin layers can be molded by additional injection molding to increase the optical surfaces of lens array 71. For example, when the lens array is formed of resins with different refractive indexes, a cemented lens can be easily manufactured compared with assembling lens arrays.

In the above embodiments, respective element transfer sections 61a and 62a as transfer optical surfaces were arranged to make an array, but single transfer section 61a and single transfer portion 62a can be arranged alternatively.

In the above embodiments, the optical coating was applied on optical plate 71p and lens array 71, but no optical coating can be applied on optical plate 71p and lens array 71.

In the above embodiments, glass optical plate 71p was employed as a transparent inorganic material. Alternatively, an optical crystal may be employed as a material of optical plate 71p. Here, an optical crystal may be a polycrystal or may be a single crystal. For example, a resin absorbs the infrared ray but transmits a certain amount of the infrared ray. On the other hand, an optical glass used for a visible ray hardly transmits the infrared ray with wavelength of 2 µm or more. Therefore, the optical glass used for the visible ray is difficult to be used for optical elements for such the application. As a crystal with high infrared transmittance, there are silicon and germanium, and these also have a high refractive index at the same time. Tantalum oxide has the characteristic that the transmittance is high not only for an infrared light but also the visible ray and that the refractive index is also high (2 or more). Some of resins are capable to transmit ultraviolet ray with a wavelength up to about 300 nm, but none of general optical glasses has a high transmittance within the wavelength range. However, optical crystals such as calcium fluoride, have high transmittance for the ultraviolet ray. Thus, optical crystals have the characteristics such as high infrared transmittance, high ultraviolet ray transmittance, high refractive index, and low dispersion, which are different from the general optical glasses. By employing such an optical crystal for optical plate 71p which is a substrate of injection molding, high optical performances can be given to molded optical element 71a.

Ceramics may also be employed as the transparent inorganic material. As for ceramics, there are materials with high infrared transmittance and materials with high refractive index. By employing the ceramics as optical plate 71p which is a substrate of injection molding, excellent optical performance can be given to the molded optical element 71a.

In the above embodiments, optical plate 71p had a flat-plate shape. Alternatively, optical plate 71p may have a shape of a single lens or a plurality of lenses joined together to make an array, such that optical plate 71p faces optical transfer surface, in other words, element transfer section 61a and element transfer section 62a. The lens shape may be convex, or may be concave, and one surface of optical plate 71p may be flat. Even if the optical plate has any one of the above shapes, the stress applied to optical plate 71p is dispersed when resin layers are formed on the opposing surfaces of optical plate 71p, which prevents curving and cracking of the optical plate 71p resulting from difference of linear expansion coefficient caused by great temperature change. The above matters are also the same as when an optical crystal and ceramics are employed as a material of optical plate 71p.

In the above embodiments, molded optical surfaces 71j and 71k were formed into a convex sphere and a concave sphere, respectively. Alternatively, the shape of these surfaces may be formed to be aspheric. By forming the optical surface shape to be aspheric, latitude in optical design increases, which enlarges the range of use of molded optical element 71a to an image pickup lens, an objective lens, a collimator lens, and a diffractive lens, and further allows manufacturing an optical element with an excellent performance compared with those formed just by layering the same number of lenses. In other words, the opposing surfaces of the transparent optical plate 71p can be treated as optical surfaces 71m and 71n. When providing molded optical surfaces 71j and 71k as aspheric opposing surfaces to be combined with the optical surfaces 71m and 71n, it enables aberration correction with four optical surfaces. Therefore, optical performance with extremely high performance at an extremely high level can be designed. Specifically, it is considered to design an aspheric resin lens in which a glass plate is inserted, as an image pickup lens for a module camera employing CCD with 2-mega pixels, where the general module camera is formed by two-lens optical system. In the designed resin lens, the value of MTF is enhanced by about 20% at the most periphery, compared with the conventional optical design employing just four aspheric surfaces in a two-lens structure.

In the above embodiments, resin seal SM was provided as a member formed as one body. Alternatively, seal body 63 and protrusion 63c can be provided as individual bodies.

In the above embodiments, the first through third mold clamping steps were performed sequentially as the operation of the molds. Alternatively, the second and the third mold claming steps may be carried out at the same time. That is, in the first mold clamping step, the interior of molding cavity CV is brought to the condition that airtightness is maintained and the vacuum is created. Then, in the next mold clamping step, the molding cavity CV is tightly sealed.

In the above embodiments, instead of making the vacuum when the injection molding is carried out, there can be employed the way that the molding cavity CV is filled up with the resin while the air in the molding cavity CV is exhausted.

In the above embodiments, injection molding apparatus 100 was provided as a vertical style and the opening and closing direction of molds 61 and 62 was set to the vertical direction, and sprue 71g for injecting the resin into molding cavity CV was provided on an upper mold. Alternatively, fixed mold 61 may be arranged at the lower side and a nozzle may be arranged under fixed mold 61. Further, injection molding apparatus 100 can be provided as a horizontal style and the opening and closing direction of molds 61 and 62 is set to the horizontal direction. In this case, in order that molding cavity CV is gently filled up with the energy curable resin with high viscosity, sprue 71g is set at the lowest position of the molding cavity CV and the location of the nozzle is lowered, which allows to uniformly harden the energy curable resin.

## Claims

1. A molding method comprising:
a first step of bringing a pair of molds including an optical transfer surface to be closed, after inserting an optical member formed of a transparent inorganic material between the pair of molds;
a second step of forming an optical element by injecting an energy curable resin into a molding cavity formed when bringing the pair of molds to be closed; and
a third step of bringing the pair of molds to be open and removing the optical element from the pair of molds.

2. The molding method of claim 1,
wherein the molding cavity is formed on both sides of the optical element.

3. The molding method of claim 1 or 2,
wherein the molding cavity includes a channel groove for the energy curable resin.

4. The molding method of any one of claims 1 to 3,
wherein the optical member has a shape of a flat plate.

5. The molding method of any one of claims 1 to 4,
wherein the optical member is formed of an optical glass.

6. The molding method of any one of claims 1 to 4,
wherein the optical member is formed of one of an optical crystal and a ceramic.

7. The molding method of any one of claims 1 to 6,
wherein a shape of the optical transfer surface is aspheric.

8. The molding method of any one of claims 1 to 7,
wherein an optical coating is formed on a surface of the optical member in advance.

9. The molding method of any one of claims 1 to 8,
wherein a plurality of optical transfer surfaces are formed on the pair of molds to make an array.

10. The molding method of claim 9,
wherein the optical member has a shape of a plurality of lenses which face the optical transfer surfaces and are arranged to make an array.

11. An arrayed optical element formed by the molding method of claim 9 or 10.

12. An optical element manufacturing method, comprising:
forming one of a reflection coating and an antireflection coating on a surface of the arrayed optical element of claim 11, before cutting the arrayed optical element up into pieces.

13. The optical element manufacturing method of claim 12, further comprising:
forming an arrayed assembled lens by layering a plurality of the arrayed optical elements.

14. The optical element manufacturing method of claim 12 or 13,
wherein the arrayed optical element comprises arrayed optical surfaces and is cut up along an area between the optical surfaces into pieces.

15. A molding method of any one of claims 1 to 8,
wherein the optical member has a shape of a lens which faces the optical transfer surface.
